# EUROPEAN PATENT SPECIFICATION

(11) **EP 0 680 878 B1**
(45) Date of publication and mention of the grant of the patent: **22.12.1999**
(21) Application number: 95105601.9
(22) Date of filing: 13.04.1995
(51) Int. Cl.: B64D 15/00, B64D 15/12

(54) **Electrothermal deicing system**
Elektrothermisches System zur Enteisung
Système électrothermique de dégivrage

(30) Priority: 13.04.1994 US 227204
(43) Date of publication of application: 08.11.1995
(73) Proprietor: THE B.F. GOODRICH COMPANY, Akron Ohio 44313-1799 (US)
(72) Inventor: Wilson, Tommy Maurice, Jr., Stow, Ohio 44224 (US); Simhauser, Steven Carl, Akron, Ohio 44314 (US)
(74) Representative: Selting, Günther, Dipl.-Ing.

(56) References cited:
- GB-A- 1 192 364
- US-A- 3 420 476

## Description

This invention relates to electrothermal deicing systems, and more particularly, an electrothermal deicing system which controls heater on and off time through direct temperature measurements.

The accumulation of ice on aircraft wings and other structural members in flight is a danger that is well known. As used herein, the term "structural members" is intended to refer to any aircraft surface susceptible to icing during flight, including wings, stabilizers, engine inlets, rotors, and so forth. Attempts have been made since the earliest days of flight to overcome the problem of ice accumulation. While a variety of techniques have been proposed for removing ice from aircraft during flight, these techniques have had various drawbacks that have stimulated continued research activities.

One approach that has been used is thermal deicing. In thermal deicing, the leading edges, that is, the portions of the aircraft that meet and break the airstream impinging on the aircraft, are heated to prevent the formation of ice or to loosen accumulated ice. The loosened ice is removed from the structural members by the airstream passing over the aircraft.

In one form of thermal deicing, heating is accomplished by placing an electrothermal pad(s), including heating elements, over the leading edges of the aircraft, or by incorporating the heating elements into the structural members of the aircraft. Electrical energy for each heating element is derived from a generating source driven by one or more of the aircraft engines or auxiliary power unit (APU). The electrical energy is intermittently or continuously supplied to provide heat sufficient to prevent the formation of ice or to loosen accumulating ice.

With some commonly employed thermal deicers, the heating elements are configured as ribbons, *i.e.* interconnected conductive segments, that are mounted on a flexible backing. The conductive segments are separated from each other by gaps, *i.e.* intersegmental gaps, and each ribbon is electrically energized by a pair of contact strips. When applied to wing or other airfoil surface, the segments are arranged in strips or zones extending spanwise or chordwise of the aircraft wing or airfoil. One of these strips, known as a spanwise parting strip, is disposed along a spanwise access which commonly coincides with a stagnation line that develops during flight in which icing is encountered. Other strips, known as chordwise parting strips, are disposed at the ends of the spanwise parting strip and are aligned along chordwise axes. Other zones, known as spanwise shedding zones, typically are positioned above and below the spanwise parting strip at a location intermediate the chordwise parting strips. Between adjacent zones, a gap, known as an interheater gap, exists.

One of the draw backs of electrothermal deicers as thus described is that excessive heat is typically supplied and/or stored in the heating elements so that as ice present at leading edge surfaces becomes completely melted, a flow of water forms back over unheated surfaces, often resulting in renewed and uncontrollable ice formation.

This drawback is avoided by heating the electrical resistance heaters in succession only for short periods, thereby melting only the adhesion layer between the ice and the aircraft surface so that the ice pieces are removed by aerodynamic forces occurring during flight.

A deicing system operating in this manner is disclosed in US Patent 3,420,476, issued to Volkner *et al.* In this patent, two groups of deicer heating elements are provided in an aircraft, one group being energized continuously when the deicer is operating, and the other group being energized periodically for short periods of time by a pulse generator. A temperature transducer is mounted adjacent to one of the continuously energized heating elements, and the time period during which the periodically energized heating elements are energized is varied in accordance with the output of the temperature transducer to thereby regulate the temperature of the heating elements in accordance with environmental conditions and to prevent the heating elements from becoming overheated. This is done by energizing the periodically energized heating elements in sequence at predetermined fixed times with a first pulse generator, and de-energizing the heating elements with a second pulse generator which is coupled to the temperature transducer and which varies the time of de-energization in accordance with the output of that transducer.

Another deicing system operating in accordance with these principals is disclosed in US Patent 4,036,457 to Volkner *et al*. which discloses a plurality of electrical resistance heaters which are sequentially operated, the duration of the heating periods in dependence on the temperature at the resistance heaters, and the duration of the non-heating periods being dependent on the water content of the atmosphere surrounding the aircraft.

It is an object of the invention to improve the versatility and efficiency of deicing systems. This object is achieved, according to the invention, with the features of claims 1, 11 and 12.

The present invention provides precise control of ice shed thicknesses which helps prevent the formation of required amount of time, sequential zones can be quickly deiced before too much ice is formed. Such direct control reduces the variables inherent in deicing by being able to accurately predict shedding of ice as well as prevent repowering of a zone until it has cooled back down below freezing. In addition, the present invention is compatible with prior electrothermal deicer manufacturing techniques, does not use cost prohibitive sensors, and offers improved reliability.

These and other objects, features, and advantages of the present invention will become more apparent in the light of the detailed description of exemplary embodiments thereof, as illustrated by the drawings.
Fig. 1 is a schematic top view representation of a deicing system mounted on an aircraft.
Fig. 2 is a top, cut away view of an electrothermal deicing pad.
Fig. 3 is an enlarged, fragmentary sectional view of a deicer.
Fig. 4 is a schematic isometric representation of a deicing assembler.
Fig. 5 is a schematic diagram of a plurality of deicing pads utilized in an aircraft.
Fig. 6 is a power cycling scheme for the deicing pads illustrated in Fig. 5.
Fig. 7 is a time verses temperature graph of a heating cycle of an electrothermal deicing element.
Fig. 8 is a simplified logic flow diagram illustrative of a first routine for controlling an electrothermal deicing system.
Fig. 9 is a simplified logic flow diagram illustrative of a second routine for controlling an electrothermal deicing system.

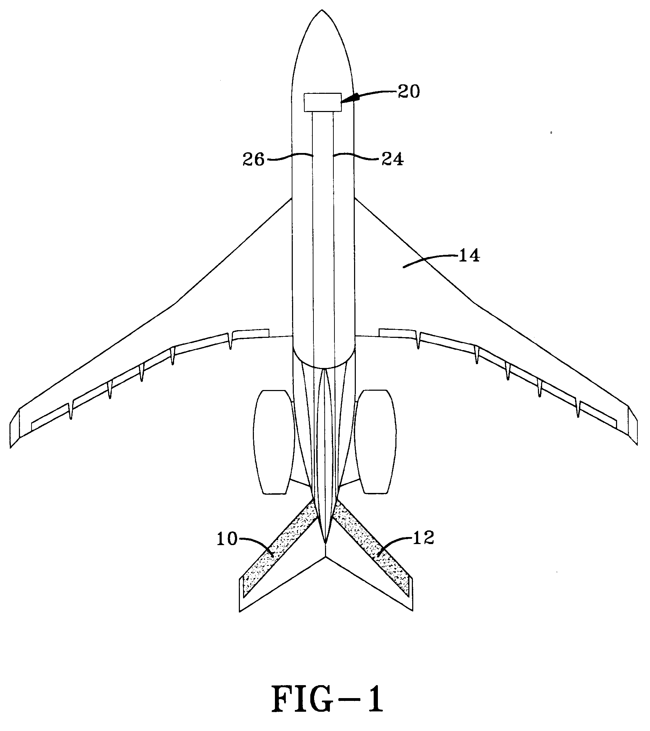

Referring now to Fig. 1, electrothermal deicing pads 10, 12 having heating elements provided therein are disposed on the horizontal stabilizers of an aircraft 14. Heaters 10, 12 are controlled by a controller 20 via control lines 24, 26, which carry temperature and time input from heaters 10, 12 to controller 20, and control signal and power outputs from controller 20 to heaters 10, 12 in response thereto.

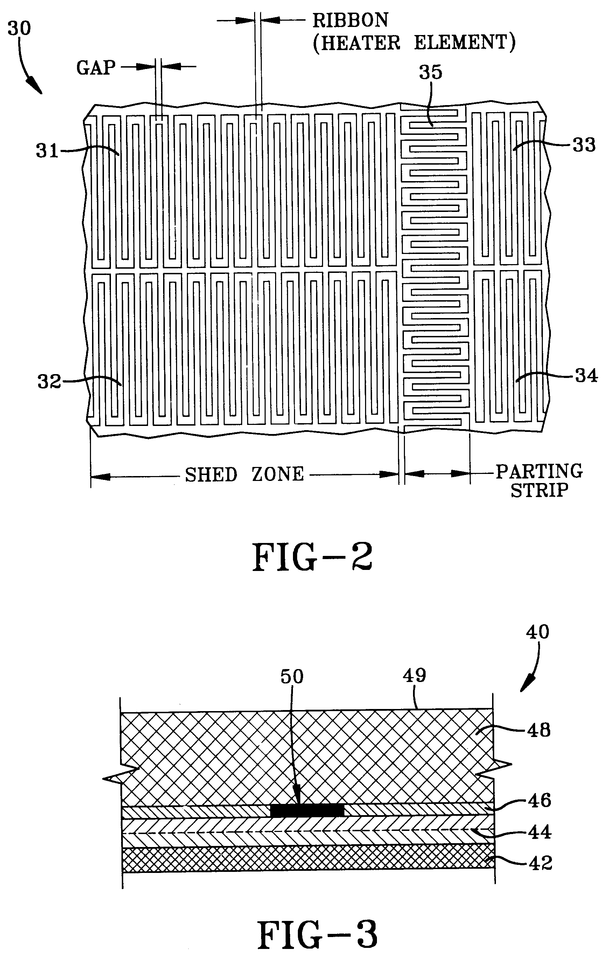

Referring now to Fig. 2, an electrothermal deicing heating pad 30 includes a plurality of heater elements 31-34 which are cycled or gated on according to a predetermined sequence. Heating pad 30 also includes a plurality of parting strips 35 (only one of which is shown) which are utilized to continuously maintain the airfoil skin (not shown) directly above the parting strip 35 above freezing. In operation, the cycled heating elements 31-34 are utilized as deicing or ice shedding elements, that is, they remove ice from the airfoil after it has accumulated. The parting strips 35 are utilized as anti-icing elements, that is, they prevent ice from forming at all.

A temperature sensor (not shown) may be utilized to monitor the temperature of the airfoil skin above parting strip 35 and a controller (not shown) may supply current to parting strip 35 in response to the temperature falling below freezing and stop the current once the temperature reaches a predetermined temperature.

Heat is generated in the deicing heating elements 31 via electrical resistance heating. Resistance of the heating element is controlled to exacting tolerances to produce the power density required in each local parting strip or shed zone. Resistance of the deicer pads can be controlled by changing the thickness, trace width or gap width of the element.

It is to be noted that any of a number of electrothermal heating elements, such as resistance wire, conductive composites, etc., well known in the art may be utilized in the present invention.

Referring now to Fig. 3, a deicing pad 40 includes a base layer 42 such as a 0.25mm (0.010 inch) thick layer of fiberglass/epoxy composite, such as 120 style fiberglass impregnated with a PL777 adhesive available from BFGoodrich. A deicing heater element 44, such as element 31 in Fig. 2 is disposed on base layer 42. A film adhesive 46 is utilized to attach heater element 44 to the overlaying aircraft skin 48. Skin 48 may be comprised of any of a number of materials well known in the arts, such as aluminum, stainless steel, polyetheretherketone (PEEK) or fiber reinforced plastics. A temperature sensor or transducer 50 is disposed between heater element 44 and the aircraft skin 48. Sensor 50 provides an electrical signal indicative of the temperature of the surface or breeze side 49 of skin 48 at a location overlying the heating element. The temperature sensor 50 is preferably a thin film resistive wire grid sensor (RTD), such as those available from RDF Inc. (model 24777), Minco, Tayco, etc., that changes resistance in response to changes in temperature. It is bonded into the deicer on the inner surface of the aluminum skin so that it will closely follow the temperature of the iced or clear outer surface. The preferred bonding agent for this purpose is the bonding agent recommended by the RTD supplier. The sensor is also in close proximity to the heating element and therefore allows effective over temperature control for the element. The thermodynamic characteristics of skin 48 may cause the temperature at sensor 50 to be different than the temperature at the skin surface 49. The electrical signal provided by sensor 50 may therefore have to be conditioned or calculated to account for this phenomenon. To this end, sensor 50 may also be located near or at the skin surface 49 to obtain a more accurate measurement of true temperature at the surface. The sensor(s), however, should be located over at least one gated heating element so that the effects of the gated heating elements on the skin temperature is accurately measured. Of course, temperature measurements may be taken above more than one heating element utilizing a multiplicity of sensors. In addition, temperature sensor 50 is preferably located at each outboard primary shedding zone, as will be described in greater detail hereinafter.

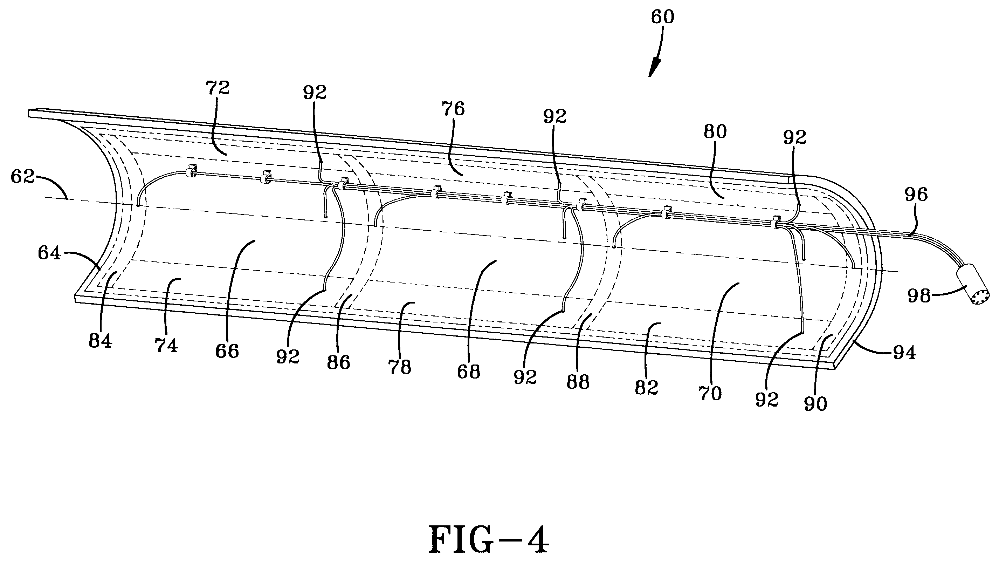

Referring now to Fig. 4, wherein an electrothermal pad or mat 60 in accordance with the present invention is formed for utilization on the leading edge of an airfoil, the centerline of the leading edge being identified by a line 62. Deicing assembly 60 includes a base layer 64 (similar to layer 42 in Fig. 3) underlying an outboard primary heating element or shed zone 66, a middle primary heating element zone 68, an inboard primary heating element zone 70, an outboard upper secondary heating element zone 72, an outboard lower secondary heating element zone 74, a middle upper secondary heating element zone 76, a lower middle secondary heating element zone 78, an inboard upper secondary heating element zone 80 and a lower inner secondary heating element zone 82. Zones 66, 68, 70, 72, 74, 76, 78, 80 and 82 are deicing zones. Chordwise parting strips 84, 86, 88, and 90 traverse the leading edge aft to upper and lower coverage limits and are anti-icing zones and are therefore continuously maintained above freezing, thereby segregating the shedding zones 70, 72, 74, 76, 78, 80, 82 and enhancing ice shedding by preventing ice from bridging across one zone to an adjacent zones. An aircraft skin 94 covers the assembly 60. Heating elements in zones 66-82, parting strips 84-90 and skin 94 are similar to those shown and described hereinbefore in Figs. 2 and 3.

It is to be noted that parting strips may also be disposed in the spanwise direction, most likely along stagnation lines.

A plurality of temperature sensors are disposed immediately subjacent skin 94 and overlying select heating elements and parting strips. Temperature sensors 92 are connected via a cable bundle 96 through a connector 98 to the controller 20 (see Fig. 1).

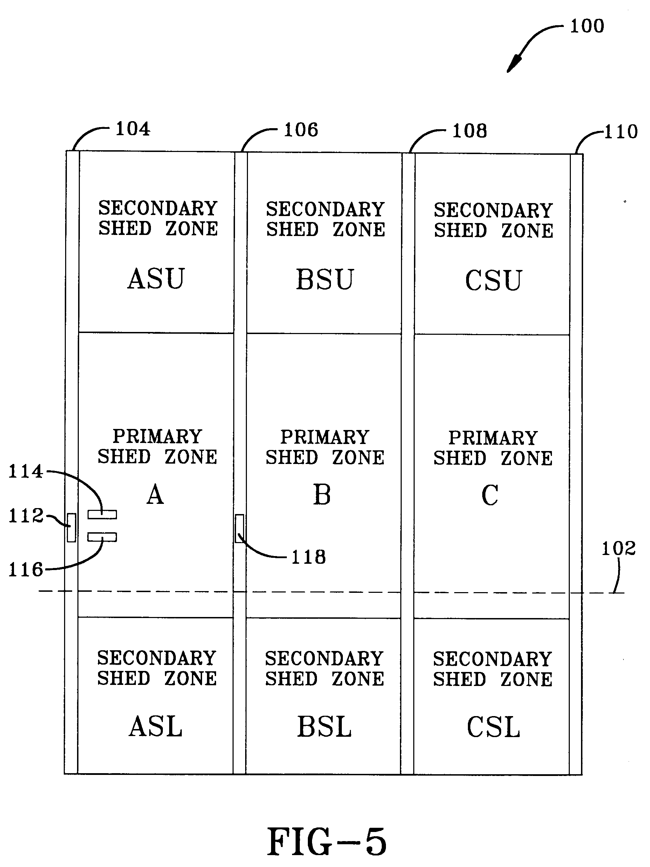

Referring now to Fig. 5, a deicing assembly, exemplary of assemblies such as illustrated in Fig. 4, is schematically illustrated in Fig. 5 as being separated into a plurality of deicing or ice shedding zones. There are three primary shed zones A, B, C bisected by a leading edge centerline 102. There are also three upper secondary shed zones ASU, BSU, and CSU, and three lower secondary shed zones ASL, BSL, CSL. Four parting strips or anti-icing strips 104, 106, 108, 110, separate the shed zones in a chordwise direction. Two temperature transducers 112, 118 are provided at parting strips 104, 106, respectively for reading the temperature of those parting strips. A primary temperature transducer 114 is provided at shed zone A for providing temperature signals indicative of the top surface or breeze side of the aircraft skin. In addition to the primary temperature sensor 114, a back up sensor 116 is provided at shed zone A in case sensor 114 fails.

The primary shed zones are located in the stagnation region and span the upper and lower airfoil. Secondary shed zones are located immediately aft of the primary zones. Secondary shed zones cover both the predicted water droplet or ice particle impingement area and some areas where run back ice is expected. Primary shed zones are cycled continuously, while run back zones are cycled periodically, such as once every four times that primary zones are cycled. Power densities will be determined such that the overall shed cycle will maintain ice thicknesses within the design criteria.

Use of primary and secondary zones tailors the system to the natural occurring pattern of ice accretion and maintains ice thicknesses less than the airframe manufacturer's specification. Ice accretion rate, and thus ice thickness is a direct function of local catch rate. Since ice accretion rates are greater at the leading edge than in aft areas, use of primary and secondary zones are acceptable for maintaining minimum ice thicknesses during shedding while minimizing power requirements.

The secondary shed zones provide protection against run back ice. Run back ice occurs after ice over the impinged area has been shed, until the deicer surface has again cooled below freezing. This ice is formed as impinging water flows chordwise along the airfoil over an unheated area and refreezes. Most heavy concentrations of run back ice are formed in forward areas such as over the secondary shed zones. The present invention minimizes run back formation by closely tailoring the zones power on time to keep surface temperatures above freezing for as short a time as possible.

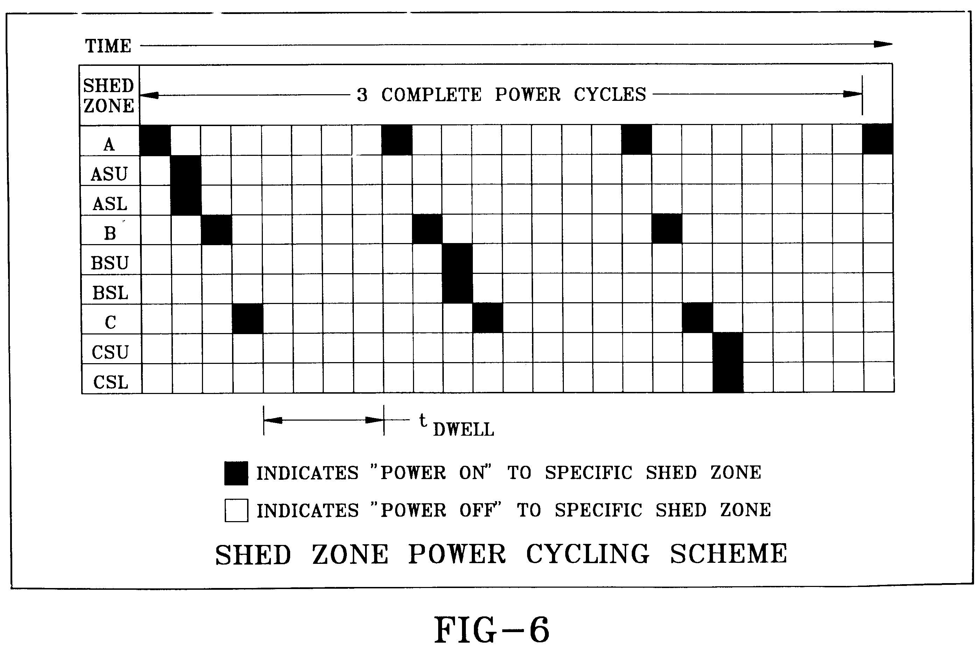

Referring now to Fig. 6, a typical power cycling scheme for the shed zones illustrated in Fig. 5 includes energizing in sequence or succession: zone A, zones ASU and ASL simultaneously, zone B, and zone C. The zones are then gated off for a predetermined dwell time (t_{DWELL}), and gated on in sequence: zone A, zone B, zones BSU and BSL simultaneously, and zone C. The zones are then gated off for t_{DWELL}, and gated on in sequence: zone A, zone B, and finally zones CSU and CSL simultaneously. The zones are gated off for t_{DWELL} and the cycle begins again.

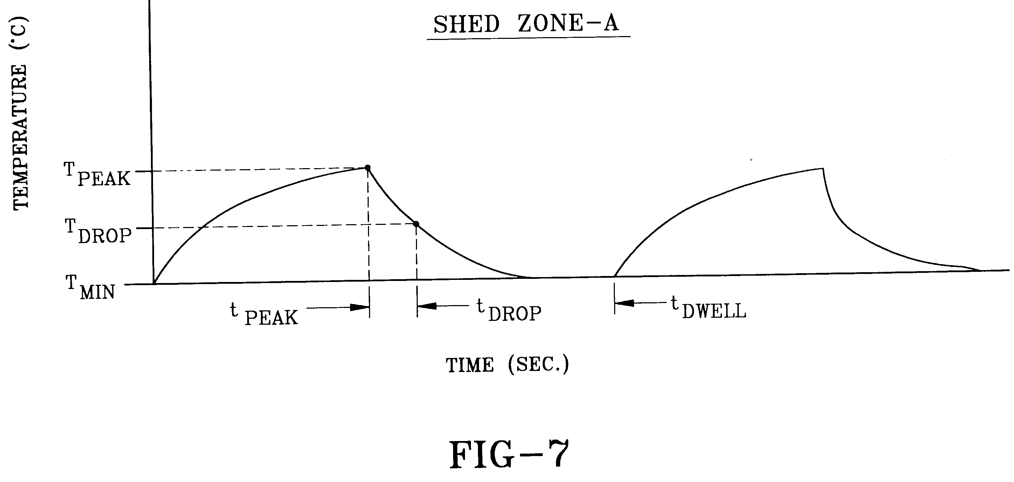

Referring now to Fig. 7, a typical cycle for the temperature at the aircraft skin surface over a heating element, such as zone A of Fig. 5 includes a rise from Tₘᵢₙ (about -10°C) to a predetermined peak temperature T_{PEAK} when the element is energized, then de-energization of the zone which causes a drop in temperature back to T_{DROP}. After a predetermined dwell time t_{DWELL}, the cycle starts over. It is to be noted that T_{PEAK} and T_{DROP} are predetermined values based on the thermodynamic characteristics of the airfoil and which may differ from system to system.

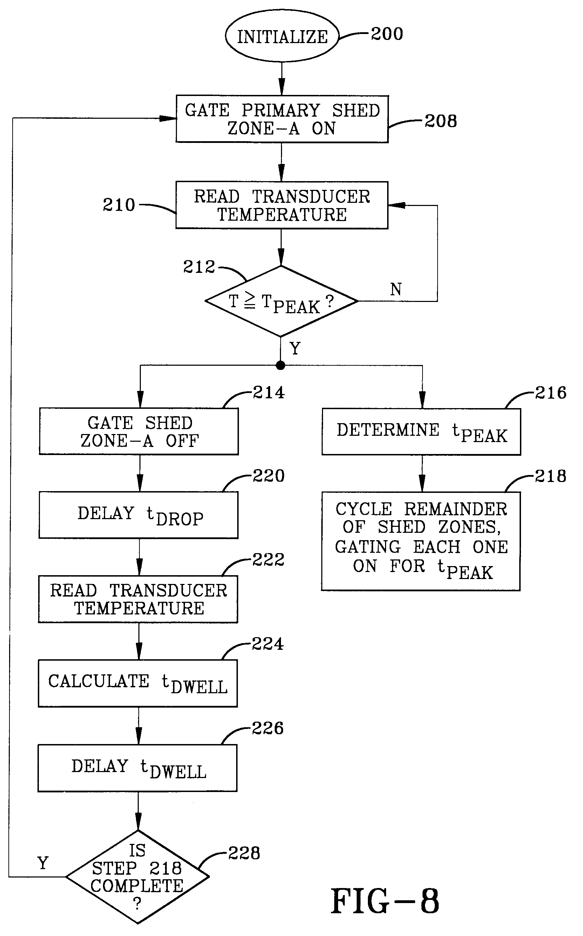

Referring now to Fig. 8, a simplified logic flow diagram illustrative of a first routine for controlling (by controller 20 illustrated in Fig. 1) an electrothermal deicing system includes an initialisation step 200 wherein the pilot recognizes an icing condition. Primary shed zone A (see Fig. 5) is thereafter gated on in a step 208, and the heating element heats the aircraft skin in a manner similar to the graph in Fig. 7. The output temperature provided by the RTD in zone A is monitored or read by the controller in a step 210. Determination of when the RTD reaches a predetermined T_{PEAK} temperature is made in a step 212. If the T_{PEAK} temperature is reached, zone A is de-energized or gated off in a step 214 while concurrently in a step 216, the controller calculates or measures the time t_{PEAK} elapsed for zone A to reach the peak temperature T_{PEAK}. The remainder of shed zones are sequentially gated on for t_{PEAK} in a step 218.

After step 214, a delay time t_{DROP} elapses in a step 220. After t_{DROP}, the controller reads the RTD temperature in a step 222, and then calculates the required dwell time t_{DWELL} in a step 224. This calculation may be achieved in any of a number of ways known in controller art, such as establishing a look up table having correlation dwell time values based on t_{DROP}. The correlation values provided in the look-up table are determined by testing the airfoil to be deiced under different icing conditions. Alternatively, the look-up tables may be replaced by an appropriate algorithm which models the airfoil to be deiced thereby giving a theoretical thermal mass co-efficient determinant upon environmental conditions. Once t_{DWELL} is determined, the controller delays for t_{DWELL} in a step 226 and the sequence is begun again at step 228 if all of the shed zones have been cycled in step 218. In this manner, the deicer heaters are cycled utilizing skin temperature as feedback for determination of the proper cycle times.

It is to be noted that steps 220 and 222 may be repeated more than once to thereby obtain a number of temperature readings which more closely match the curve illustrated Fig. 7. A better approximation of the environmental conditions may be obtained if a plurality of temperature readings are taken, thereby providing a more appropriate calculation of t_{DWELL} in step 224.

One method to determine empirically the proper values for T_{DROP} and t_{DWELL} is to test the appropriate airfoil in an icing tunnel under a variety of environmental icing conditions. In this manner, the most efficient and effective cycle times and dwell times can be achieved.

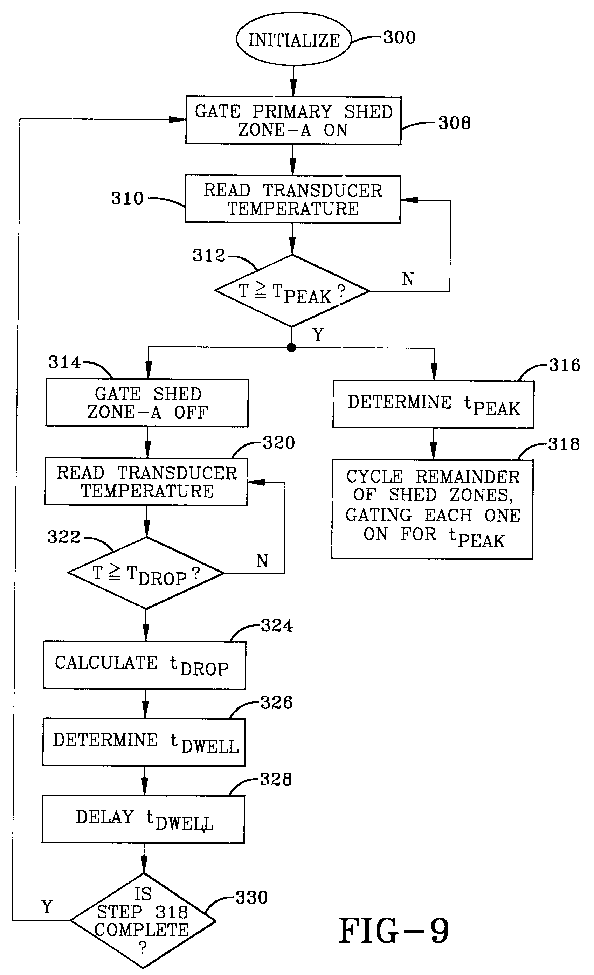

Referring now to Fig. 9, a simplified logic flow diagram illustrative of a second routine for controlling (by controller 20 illustrated in Fig. 1) an electrothermal deicing system in accordance with the present invention includes an initialization step 300 wherein the pilot recognizes an icing condition. Primary shed zone A (see Fig. 5) is thereafter gated on in a step 308, and the heating element heats the aircraft skin in a manner similar to the graph in Fig. 7. The output temperature provided by the RTD in zone A is monitored or read by the controller in a step 310. Determination of when the RTD reaches a predetermined T_{PEAK} temperatures is made in a step 312. If the T_{PEAK} temperature is reached, zone A is de-energized or gated off in a step 314 while concurrently in a step 316, the controller calculates or measures the time t_{PEAK} elapsed for zone A to reach the peak temperature T_{PEAK}. The remainder of shed zones are sequentially gated on for t_{PEAK} in a step 318.

After step 314, the output temperature provided by the RTD in zone A is monitored or read by the controller in a step 320. Determination of when the RTD reaches a predetermined T_{DROP} temperatures is made in a step 322. If the T_{DROP} temperature is reached, the controller calculates the drop time t_{DROP} elapsed since t_{PEAK} in a step 324. The controller then calculates or determines the required dwell time t_{DWELL} in a step 326. This calculation may be achieved in any of a number of ways known in controller art, such as establishing a look up table having correlation dwell time values based on t_{DROP}. The correlation values provided in the look-up table are determined by testing the airfoil to be deiced under different icing conditions. Alternatively, the look-up tables may be replaced by an appropriate algorithm which models the airfoil to be deiced thereby giving a theoretical thermal mass co-efficient determinant upon environmental conditions. Once t_{DWELL} is determined, the controller delays for t_{DWELL} in a step 328 and the sequence is begun again at a step 330 if all of the shed zones have been cycled in step 318. In this manner, the deicer heaters are cycled utilizing skin temperature as feedback for determination of the proper cycle times.

It is to be noted that steps 320, 322 and 324 may be repeated more than once to thereby obtain a number of t_{DROP} time calculations which more closely match the curve illustrated Fig. 7. A better approximation of the environmental conditions may be obtained if a plurality of time calculations are taken, thereby providing a more appropriate determination of t_{DWELL} in step 326.

It is preferred that the shedding zones are cyclicly heated starting at the outboard spanwise location on the left horizontal stabilizer, progressing to the inboard spanwise location. Similar cyclical sequences can be used for other airfoils or other leading edge fairings. This cycle is then repeated for the right horizontal stabilizer. During each heat cycle, power is applied for a period of time that results in shedding accreted ice.

It is to be noted that the on time for each succeeding zone on the respective airfoil is determined by the on time that was required for the initial outboard primary shedding zone. This on time is updated each time that an outboard primary shedding zone is cycled. The outboard shedding zone was selected for overall cyclic control because it will accumulate ice fastest and is generally the more critical aerodynamically. Dwell time is determined in a similar fashion. At warmer icing conditions, a minimum total cycle time may be preset to allow the surface of the deicer to fully cool. Actuating the deicer while it is still above freezing may result in the formation of run back ice.

It is to be noted that the temperature sensors could be placed on each deicing zone to more accurately control each zone. The primary invention utilizes a minimum of sensors to reduce system complexity and cost.

It may be necessary to design into the present system automatic redundancy to assure a high probability of mission success. Such redundant systems are well known to those skilled in the art.

The controller 20 (Fig. 1), whose function is described hereinbefore, may be constructed in any of a number of ways well known in the art. For instance, the controller may be comprised of an on board computer which implements the heater cycling sequence utilizing a software program. The exemplary embodiments herein are described as being implemented within a program of a digital deicing control, the flowchart of which is illustrated in Fig.s 8 and 9 hereinbefore. The particular characteristics of the deicing controller are irrelevant, so long as it is of the type that uses a temperature signal to control the gating of the heater elements. The invention may be implemented with dedicated digital or analog hardware if desired. In such a case, it may be implemented in a different fashion from that disclosed herein in accordance with the general equivalence between software as shown herein and dedicated digital hardware and software. Of course, the present invention may be implemented within a digital automatic flight control system computer. All of the foregoing is irrelevant to the invention, it suffices to select the aspects thereof which are desired to utilized and to provide suitable signal processing to achieve the desired result in accordance with the invention, in a manner suited to the intended implementation or aircraft use.

## Claims

1. An airfoil having a surface exposed to ice, including an electrothermal apparatus, the apparatus comprising:
a plurality of deicing electrothermal elements (66-82) disposed at predetermined positions underlying the airfoil (94) for heating the airfoil (94) intermittently, said plurality of deicing electrothermal elements (66-82) including a primary heating element (66,68,70),
at least one anti-icing electrothermal element (84,86,88,90) underlying the airfoil (94) and disposed adjacent said deicing electrothermal elements (66-82) for maintaining the airfoil (94) continuously above freezing, and
transducer means (92) disposed between said primary heating element (66,68,70) and the airfoil surface or disposed on the airfoil surface above said primary heating element (66,68,70) for providing a temperature signal indicative of the temperature at the airfoil surface,
**characterized by**
controller means (20) responsive to said temperature signal for: gating on said primary heating element over a t_{RISE} time period until said transducer means (92) reaches a predetermined T_{PEAK} temperature and then gating off said primary element (66,68,70), and sequentially gating on the remainder of said plurality of deicing electrothermal elements (72-82) for a time period that is a function of t_{RISE}.

2. An airfoil according to claim 1, wherein said controller means (20) gates said primary heating element (66,68,70) back on after a predetermined dwell time t_{DWELL} until said transducer means (92) reaches said T_{PEAK} temperature over another t_{RISE} time period, thereby repeating the sequential gating on of the remainder of said plurality of said deicing electrothermal elements (72-82) for a time period that is a function of t_{RISE}.

3. An airfoil according to claim 2, wherein said controller means (20) determines a t_{DROP} time period between said transducer means (92) reaching said T_{PEAK} and reaching a predetermined T_{DROP} temperature, and said controller means (20) determines said dwell time t_{DWELL} as a function of said t_{DROP} time.

4. An airfoil according to claim 2 or 3, wherein said controller means (20) detects said transducer means (92) reaching a predetermined T_{DROP} temperature after gating off said primary heating element (66,68,70) and determines a t_{DROP} time period between said T_{PEAK} and T_{DROP}, and said controller means (20) determines said dwell time t_{DWELL} as a function of said T_{DROP}.

5. An airfoil according to one of claims 1-4, wherein said transducer means (92) is disposable at a location where the airfoil (94) is susceptible to icing.

6. An airfoil according to one of claims 1-5, wherein said transducer means (92) is a resistive temperature detector.

7. An airfoil according to one of claims 1-6, wherein said transducer means (92) is attachable to the airfoil (94).

8. An airfoil according to one of claims 1-7, wherein said transducer means (92) is bondable to the airfoil (94).

9. An airfoil according to one of claims 2-8, wherein said controller means (20) determines a plurality of t_{DROP} time periods between said transducer means (92) reaching said T_{PEAK} and reaching a plurality of predetermined T_{DROP} temperatures, and said controller means (20) determines said dwell time t_{DWELL} as a function of said plurality of t_{DROP} time periods.

10. An airfoil according to one of claims 2-8, wherein said controller means (20) detects said transducer means (92) reaching a plurality of predetermined T_{DROP} temperatures after gating off said primary heating element (66,68,70) and determines a plurality of t_{DROP} time periods between said T_{PEAK} and T_{DROP} temperatures, and said controller means (20) determines said dwell time t_{DWELL} as a function of said plurality of T_{DROP} temperatures.

11. An electrothermal airfoil deicer apparatus comprising:
a plurality of deicing electrothermal elements (66-82) adapted for underlying the airfoil (94), being disposed at predetermined positions for heating intermittently, said plurality of deicing elements including a primary heating element (66,68,70),
at least one anti-icing electrothermal element (84,86,88,90) adapted for underlying the airfoil (94), being disposed adjacent said deicing electrothermal elements (66-82), for maintaining the airfoil (94) continuously above freezing, and
airfoil surface temperature transducer means (92) disposed above said primary element (66, 68, 70) capable of being disposable between the primary heating element (66,68,70) and the airfoil surface or on the airfoil surface for providing a temperature signal indicative of the airfoil surface temperature,
**characterized by**
controller means (20) responsive to said temperature signal for: gating on said primary heating element (66,68,70) until said transducer means (92) reaches a predetermined T_{PEAK} temperature over a t_{RISE} time period and then gating off said primary heating element (66,68,70), and sequentially gating on the remainder of said plurality of said deicing electrothermal elements (72-82) for a time period that is a function of t_{RISE}.

12. A method of deicing an airfoil surface comprising the steps of:
providing a plurality of deicing electrothermal elements (66-82) disposed at predetermined positions underlying the airfoil (94), said plurality of deicing electrothermal elements (66-82) including a primary element (66,68,70),
providing at least one anti-icing electrothermal element (84,86,88,90) underlying the airfoil (94) for maintaining the airfoil (94) continuously above freezing and disposed adjacent said deicing electrothermal elements (66-82), and
providing transducer means (92) between said primary element (66,68,70) and the airfoil surface (94) for providing a temperature signal indicative of the temperature at the airfoil surface (94),
**characterized by** the steps of:
gating on said primary element (66,68,70) until said transducer means (92) reaches a predetermined T_{PEAK} temperature over a t_{RISE} time period and then gating off said primary element (66,68,70), and
sequentially gating on the remainder of said plurality of deicing electrothermal elements (72-82) for a time period that is a function of t_{RISE}.

13. A method of deicing an airfoil surface according to claim 12, further comprising the steps of:
gating said primary element (66,68,70) back on after a predetermined dwell time t_{DWELL} until said transducer means (92) reaches said T_{PEAK} temperature over another t_{RISE} time period, and
repeating said sequential gating step.

14. A method of deicing an airfoil surface according to claim 12 or 13, further comprising the steps of:
determining a t_{DROP} time period between said transducer means (92) reaching said T_{PEAK} temperature and a predetermined T_{DROP} temperature, and
setting said dwell time t_{DWELL} as a function of said t_{DROP} time.

15. A method of deicing an airfoil surface according to one of claims 12-14, further comprising the steps of:
determining when said transducer means (92) reaches a predetermined T_{DROP} temperature after said gating step,
determing a t_{DROP} time period between T_{PEAK} and T_{DROP}, and
setting said dwell time t_{DWELL} as a function of said T_{DROP} time.

16. A method of deicing an airfoil surface according to one of claims 12-15, wherein said transducer means (92) is disposed at a location where the airfoil (94) is susceptible to icing.

17. A method of deicing an airfoil surface according to one of claims 12-16, wherein said transducer means (92) is a resistive temperature detector.

18. A method of deicing an airfoil surface according to one of claims 12-17, further comprising the step of attaching said transducer means (92) to the airfoil (94).

19. A method of deicing an airfoil surface according to claim 18, further comprising the step of bonding said transducer means (92) to the airfoil (94).

20. A method of deicing an airfoil surface according to one of claims 12-19, further comprising the steps of:
determining a plurality of t_{DROP} time periods between said transducer means (92) reaching said T_{PEAK} temperature and a plurality of predetermined T_{DROP} temperatures, and
setting said dwell time t_{DWELL} as a function of said t_{DROP} time periods.

21. A method of deicing an airfoil surface according to one of claims 12-20, further comprising the steps of:
determining when said transducer means (92) reaches a plurality of predetermined T_{DROP} temperatures after said gating step,
determining a plurality of t_{DROP} time periods between T_{PEAK} and T_{DROP} temperatures, and
setting said dwell time t_{DWELL} as a function of said T_{DROP} temperatures.

## Patentansprüche

1. Tragfläche mit einer Eis ausgesetzten Oberfläche, wobei die Tragfläche eine elektrothermische Vorrichtung umfaßt, und die Vorrichtung aufweist:
- mehrere elektrothermische Enteisungselemente (66-82), die an vorbestimmten Stellen unter der Tragflächenhaut (94) liegen, zum periodischen Erwärmen der Tragflächenhaut (94), wobei die mehreren elektrothermischen Enteisungselemente (66-82) ein primäres Heizelement (66, 68, 70) aufweisen,
- wenigstens ein elektrothermisches Anti-Vereisungselement (84, 86, 88, 90), das unter der Tragflächenhaut (94) liegt und den elektrothermischen Enteisungselementen (66-82) benachbart angeordnet ist, um die Tragflächenhaut (94) kontinuierlich über dem Gefrierpunkt zu halten, und
- eine zwischen dem primären Heizelement (66, 68, 70) und der Tragflächenoberfläche oder auf der Tragflächenoberfläche über dem primären Heizelement (66, 68, 70) angeordneten Wandlereinrichtung (92) zum Liefern eines die Temperatur an der Tragflächenoberfläche angebenden Temperatursignals,
gekennzeichnet durch
eine auf das Temperatursignal reagierende Steuereinrichtung (20) zum Aktivieren des primären Heizelements über einen Zeitraum t_{RISE} bis die Wandlereinrichtung (92) eine vorbestimmte Temperatur T_{PEAK} erreicht und zum anschließenden Deaktivieren des primären Elements (66, 68, 70) und sequentiellen Aktivieren der übrigen der mehreren elektrothermischen Enteisungselemente (72-82) über einen Zeitraum, der eine Funktion von t_{RISE} ist.

2. Tragfläche nach Anspruch 1, bei der die Steuereinrichtung (20) das primäre Heizelement (66, 68, 70) nach einer vorbestimmten Verweilzeit t_{DWELL} wieder aktiviert, bis die Wandlereinrichtung (92) die Temperatur T_{PEAK} über einen anderen Zeitraum t_{RISE} erreicht, wodurch das sequentielle Aktivieren der übrigen der mehreren elektrothermischen Enteisungselemente (72-82) über einen Zeitraum, der eine Funktion von t_{RISE} ist, wiederholt wird.

3. Tragfläche nach Anspruch 2, bei der die Steuereinrichtung (20) einen Zeitraum t_{DROP} zwischen dein Erreichen von T_{PEAK} und dem Erreichen einer vorbestimmten Temperatur T_{DROP} durch die Wandlereinrichtung (92), und bei der die Steuereinrichtung (20) die Verweilzeit t_{DWELL} als Funktion der Zeit t_{DROP} bestimmt.

4. Tragfläche nach Anspruch 2 oder 3, bei der die Steuereinrichtung (20) erkennt, daß die Wandlereinrichtung (92) eine vorbestimmte Temperatur T_{DROP} nach dein Deaktivieren des primären Heizelements erreicht hat, und einen Zeitraum t_{DROP} zwischen T_{PEAK} und T_{DROP} ermittelt, und bei der die Steuereinrichtung (20) die Verweilzeit t_{DWELL} als Funktion von T_{DROP} bestimmt.

5. Tragfläche nach einem der Ansprüche 1-4, bei der die Wandlereinrichtung (92) an einer Stelle angeordnet werden kann, an der die Tragflächenhaut (94) der Vereisung ausgesetzt ist.

6. Tragfläche nach einem der Ansprüche 1-5, bei der die Wandlereinrichtung (92) ein Widerstandstemperaturdetektor ist.

7. Tragfläche nach einem der Ansprüche 1-6, bei der die Wandlereinrichtung (92) an der Tragflächenhaut (94) anbringbar ist.

8. Tragfläche nach einem der Ansprüche 1-7, bei der die Wandlereinrichtung (92) mit der Tragflächenhaut (94) verbondbar ist.

9. Tragfläche nach einem der Ansprüche 2-8, bei der die Steuereinrichtung (20) mehrere Zeiträume t_{DROP} zwischen dem Erreichen von T_{PEAK} und dem Erreichen mehrerer vorbestimmter Temperaturen T_{DROP} durch die Wandlereinrichtung (20) bestimmt, und bei der die Steuereinrichtung (20) die Verweilzeit t_{DWELL} als Funktion der mehreren Zeiträume t_{DROP} bestimmt.

10. Tragfläche nach einem der Ansprüche 2-8, bei der die Steuereinrichtung (20) erkennt, daß die Wandlereinrichtung (92) mehrere vorbestimmte Temperaturen T_{DROP} nach dem Deaktivieren des primären Heizelements (66, 68, 70) erreicht, und mehrere Zeiträume t_{DROP} zwischen Temperaturen T_{PEAK} und T_{DROP} bestimmt, und bei der die Steuereinrichtung (20) die Verweilzeit t_{DWELL} als Funktion der mehreren Temperaturen T_{DROP} bestimmt.

11. Elektrothermische Tragflächenenteisungsvorrichtung mit:
- mehreren elektrothermischen Enteisungselementen (66-82), die zum periodischen Erwärmen an vorbestimmten Stellen angeordnet sind und unter der Tragflächenhaut (94) liegen können, wobei die mehreren elektrothermischen Enteisungselemente (66-82) ein primäres Heizelement (66, 68, 70) aufweisen,
- wenigstens einem elektrothermischen Anti-Vereisungselement (84, 86, 88, 90), das unter der Tragflächenhaut (94) liegen kann und den elektrothermischen Enteisungselementen (66-82) benachbart angeordnet ist, um die Tragflächenhaut (94) kontinuierlich über dem Gefrierpunkt zu halten, und
- einer zwischen dein primären Heizelement (66, 68, 70) und der Tragflächenoberfläche oder auf der Tragflächenoberfläche über dem primären Heizelement (66, 68, 70) angeordneten Wandlereinrichtung (92) zum Liefern eines die Temperatur an der Tragflächenoberfläche angebenden Temperatursignals,
gekennzeichnet durch
eine auf das Temperatursignal reagierende Steuereinrichtung (20) zum Aktivieren des primären Heizelements bis die Wandlereinrichtung (92) über einen Zeitraum t_{RISE} eine vorbestimmte Temperatur T_{PEAK} erreicht und zum anschließenden Deaktivieren des primären Elements (66, 68, 70) und sequentiellen Aktivieren der übrigen der mehreren elektrothermischen Enteisungselemente (72-82) über einen Zeitraum, der eine Funktion von t_{RISE} ist.

12. Verfahren zum Enteisen einer Tragflächenoberfläche mit den folgenden Schritten:
- Vorsehen mehrerer elcktrothermischer Enteisungselemente (66-82), die an vorbestimmten Stellen unter der Tragflächenhaut (94) liegen, wobei die mehreren elektrothermischen Enteisungselemente (66-82) ein primäres Heizelement (66, 68, 70) aufweisen,
- Vorsehen wenigstens eines elektrothermischen Anti-Vereisungselements (84, 86, 88, 90), das unter der Tragflächenhaut (94) liegt, um die Tragflächenhaut (94) kontinuierlich über dem Gefrierpunkt zu halten, und den elektrothermischen Enteisungselementen (66-82) benachbart angeordnet ist, und
- Vorsehen einer zwischen dem primären Heizelement (66, 68, 70) und der Tragflächenoberfläche (94) angeordneten Wandlereinrichtung (92) zum Liefern eines die Temperatur an der Tragflächenoberfläche (94) angebenden Temperatursignals,
gekennzeichnet durch die folgenden Schritte:
- Aktivieren des primären Heizelements bis die Wandlereinrichtung (92) über einen Zeitraum t_{RISE} eine vorbestimmte Temperatur T_{PEAK} erreicht und anschließendes Deaktivieren des primären Elements (66, 68, 70), und
- sequentielles Aktivieren der übrigen der mehreren elektrothermischen Enteisungselemente (72-82) über einen Zeitraum, der eine Funktion von t_{RISE} ist.

13. Verfahren zum Enteisen einer Tragflächenoberfläche nach Anspruch 12, ferner mit den folgenden Schritten:
- erneutes Aktivieren des Heizelements (66, 68, 70) nach einer vorbestimmten Verweilzeit t_{DWELL}, bis die Wandlereinrichtung (92) die Temperatur T_{PEAK} über einen anderen Zeitraum t_{RISE} erreicht, und
- Wiederholen des sequentiellen Aktivierungsschritts.

14. Verfahren zum Enteisen einer Tragflächenoberfläche nach Anspruch 12 oder 13, ferner mit den folgenden Schritten:
- Bestimmen eines Zeitraums t_{DROP} zwischen dem Erreichen von T_{PEAK} und dem Erreichen einer vorbestimmten Temperatur T_{DROP} durch die Wandlereinrichtung (92), und
- Einstellen der Verweilzeit t_{DWELL} als Funktion der Zeit t_{DROP}.

15. Verfahren zum Enteisen einer Tragflächenoberfläche nach einen, der Ansprüche 12-14, ferner mit den folgenden Schritten:
- Erkennen, daß die Wandlereinrichtung (92) eine vorbestimmte Temperatur T_{DROP} nach dem Aktivierungsschritt erreicht hat;
- Bestimmen eines Zeitraum t_{DROP} zwischen T_{PEAK} und T_{DROP}, und
- Einstellen der Verweilzeit t_{DWELL} als Funktion von T_{DROP}.

16. Verfahren zum Enteisen einer Tragflächenoberfläche nach einem der Ansprüche 12-15, bei dem die Wandlereinrichtung (92) an einer Stelle angeordnet ist, an der die Tragflächenhaut (94) der Vereisung ausgesetzt ist.

17. Verfahren zum Enteisen einer Tragflächenoberfläche nach einem der Ansprüche 12-16, bei dem die Wandlereinrichtung (92) ein Widerstandstemperaturdetektor ist.

18. Verfahren zum Enteisen einer Tragflächenoberfläche nach einem der Ansprüche 12-17, ferner mit dem Schritt des Anbringens der Wandlereinrichtung (92) an der Tragflächenhaut (94).

19. Verfahren zum Enteisen einer Tragflächenoberfläche nach Anspruch 18, ferner mit dem Schritt des Verbondens der Wandlereinrichtung (92) mit der Tragflächenhaut (94).

20. Verfahren zum Enteisen einer Tragflächenoberfläche nach einem der Ansprüche 12-19, ferner mit den folgenden Schritten:
- Bestimmen mehrerer Zeiträume t_{DROP} zwischen dein Erreichen von T_{PEAK} und dein Erreichen mehrerer vorbestimmter Temperaturen T_{DROP} durch die Wandlereinrichtung (20), und
- Einstellen der Verweilzeit t_{DWELL} als Funktion der mehreren Zeiträume t_{DROP}.

21. Verfahren zum Enteisen einer Tragflächenoberfläche nach einem der Ansprüche 12-20, ferner mit den folgenden Schritten:
- Erkennen, daß die Wandlereinrichtung (92) mehrere vorbestimmte Temperaturen T_{DROP} nach dem Aktivierungsschritt erreicht hat,
- Bestimmen mehrerer Zeiträume t_{DROP} zwischen Temperaturen T_{PEAK} und T_{DROP}, und
- Einstellen der Verweilzeit t_{DWELL} als Funktion der mehreren Temperaturen T_{DROP}.

## Revendications

1. Plan de sustentation possédant une surface exposée au givre, comprenant un dispositif électrothermique, le dispositif comprenant :
une pluralité d'éléments électrothermiques de dégivrage (66 à 82) disposés dans des positions prédéterminés au-dessous du plan de sustentation (94) pour chauffer le plan de sustentation (94) d'une manière intermittente, ladite pluralité d'éléments électrothermiques de dégivrage (66 à 82) comprenant un élément de chauffage primaire (66, 68, 70),
au moins un élément électrothermique anti-givre (84, 86, 88, 90) situé au-dessous du plan de sustentation (94) et disposé au voisinage desdits éléments électrothermiques de dégivrage (66 à 82) pour maintenir le plan de sustentation (94) continûment au-dessus de l'état de givrage, et
des moyens formant transducteurs (92) disposés entre ledit élément de chauffage primaire (66, 68, 70) et la surface du plan de sustentation ou disposés sur la surface du plan de sustentation au-dessus dudit élément de chauffage primaire (66, 68, 70) pour produire un signal de température indicatif de la température au niveau de la surface du plan de sustentation,
caractérisé par
des moyens de commande (20) aptes à répondre audit signal de température pour : activer ledit élément de chauffage primaire pendant un intervalle de temps t_{MONTEE} jusqu'à ce que lesdits moyens formant transducteurs (92) atteignent une température prédéterminée T_{PIC}, puis à désactiver ledit élément primaire (66, 68, 70) et activer séquentiellement le reste de ladite pluralité d'éléments électrothermiques de dégivrage (72 à 82) pendant un intervalle de temps qui est fonction de t_{MONTEE}.

2. Plan de sustentation selon la revendication 1, dans lequel lesdits moyens de commande (20) activent à nouveau lesdits éléments de chauffage primaire (66, 68, 70) après un temps d'arrêt prédéterminé t_{ARRET} jusqu'à ce que les moyens formant transducteurs (92) atteignent ladite température T_{PIC} pendant un autre intervalle de temps t_{MONTEE}, ce qui conduit à une répétition de l'activation séquentielle du reste de ladite pluralité desdits éléments électrothermiques de dégivrage (72 à 82) pendant un intervalle de temps qui est fonction de t_{MONTEE}.

3. Plan de sustentation selon la revendication 2, dans lequel lesdits moyens de commande (20) déterminent un intervalle de temps t_{REDUCTION} entre les instants où lesdits moyens formant transducteurs (92) atteignent ladite température T_{PIC} et une température T_{BAISSE} prédéterminée, et lesdits moyens de commande (20) déterminent ledit temps d'arrêt t_{ARRET} en fonction dudit temps t_{BAISSE}.

4. Plan de sustentation selon la revendication 2 ou 3, dans lequel lesdits moyens de commande (20) détectent le fait que lesdits moyens formant transducteurs (92) atteignent une température T_{BAISSE} prédéterminée après la désactivation dudit élément de chauffage primaire (66, 68, 70), et déterminent un intervalle de temps t_{BAISSE} entre T_{PIC} et T_{BAISSE}, et lesdits moyens de commande (20) déterminent un temps d'arrêt t_{ARRET} en fonction de ladite température T_{BAISSE}.

5. Plan de sustentation selon l'une des revendications 1 à 4, dans lequel lesdits moyens formant transducteurs (92) peuvent être disposés en un emplacement où le plan de sustentation (94) est susceptible d'être le siège d'un givrage.

6. Plan de sustentation selon l'une quelconque des revendications 1 à 5, dans lequel lesdits moyens formant transducteurs (92) sont un détecteur résistif de température.

7. Plan de sustentation selon l'une quelconque des revendications 1 à 6, dans lequel lesdits moyens formant transducteurs (92) peuvent être fixés au plan de sustentation (94).

8. Plan de sustentation selon l'une quelconque des revendications 1 à 7, dans lequel lesdits moyens formant transducteurs (92) peuvent être fixés au plan de sustentation (94).

9. Plan de sustentation selon l'une quelconque des revendications 2 à 8, dans lequel lesdits moyens de commande (20) déterminent une pluralité d'intervalles de temps t_{BAISSE} entre l'instant où lesdits moyens formant transducteurs (92) atteignent ladite température T_{PIC} et l'instant où ils atteignent une pluralité de températures prédéterminées T_{BAISSE}, et lesdits moyens de commande (20) déterminent ledit temps d'arrêt T_{ARRET} en fonction de ladite pluralité d'intervalles de temps t_{BAISSE}.

10. Plan de sustentation selon l'une quelconque des revendications 2 à 8, dans lequel lesdits moyens de commande (20) détectent le fait que lesdits moyens formant transducteurs (92) atteignent une pluralité de températures prédéterminées T_{BAISSE} après désactivation dudit élément de chauffage primaire (66, 68, 70) et déterminent une pluralité d'intervalles de temps t_{BAISSE} entre lesdites températures T_{PIC} et T_{BAISSE}, et lesdits moyens de commande (20) déterminent ledit temps d'arrêt t_{ARRET} en fonction de ladite pluralité de température T_{BAISSE}.

11. Dispositif électrothermique de dégivrage de plan de sustentation comprenant :
une pluralité d'éléments électrothermiques de dégivrage (66 à 82) adaptés pour être situés sous le plan de sustentation (94) en étant disposés dans des positions prédéterminés pour exécuter un chauffage intermittent, ladite pluralité d'éléments électrothermiques de dégivrage comprenant un élément de chauffage primaire (66, 68, 70),
au moins un élément électrothermique anti-givre (84, 86, 88, 90) adapté pour être situé au-dessous du plan de sustentation (94) en étant disposé au voisinage desdits éléments électrothermiques de dégivrage (66 à 82) pour maintenir le plan de sustentation (94) continûment au-dessus de l'état de givrage, et
des moyens (92) formant transducteurs de la température de surface du plan de sustentation, disposés au-dessus dudit élément primaire (66, 68, 70) adaptés pour être disposés entre l'élément de chauffage primaire (66, 68, 70) et la surface du plan de sustentation ou sur la surface du plan de sustentation pour produire un signal de température indicatif de la température de la surface du plan de sustentation,
caractérisé par
des moyens de commande (20) aptes à répondre audit signal de température pour : activer ledit élément de chauffage primaire (66, 68, 70) pendant un intervalle de temps t_{MONTEE} jusqu'à ce que lesdits moyens formant transducteurs (92) atteignent une température prédéterminée T_{PIC}, puis à désactiver ledit élément primaire (66, 68, 70) et activer séquentiellement le reste de ladite pluralité d'éléments électrothermiques de dégivrage (72 à 82) pendant un intervalle de temps qui est fonction de t_{MONTEE}.

12. Procédé de dégivrage d'une surface de plan de sustentation, comprenant les étapes consistant à :
prévoir une pluralité d'éléments électrothermiques de dégivrage (66 à 82) disposés dans des positions prédéterminés au-dessous du plan de sustentation (94), ladite pluralité d'éléments électrothermiques de dégivrage (66 à 82) comprenant un élément primaire (66, 68, 70),
prévoir au moins un élément électrothermique anti-givre (84, 86, 88, 90) situé au-dessous du plan de sustentation (94) pour maintenir le plan de sustentation (94) continûment au-dessus de l'état de givrage et disposé au voisinage desdits éléments électrothermiques de dégivrage (66 à 82), et
prévoir des moyens formant transducteurs (92) entre ledit élément primaire (66, 68, 70) et la surface (94) du plan de sustentation pour qu'ils délivrent un signal de température indicatif de la température de la surface (94) du plan de sustentation,
caractérisé par les étapes consistant à :
activer ledit élément primaire (66, 68, 70) jusqu'à ce que lesdits moyens formant transducteurs (92) atteignent une température prédéterminée T_{PIC} pendant un intervalle de temps t_{MONTEE}, puis désactiver ledit élément primaire (66, 68, 70), et
activer séquentiellement le reste de ladite pluralité d'éléments électrothermiques de dégivrage (72 à 82) pendant un intervalle de temps qui est fonction de t_{MONTEE}.

13. Procédé de dégivrage d'une surface de plan de sustentation selon la revendication 12, comprenant les étapes consistant à :
activer à nouveau ledit élément primaire (66, 68, 70) après un intervalle de temps d'arrêt prédéterminé t_{ARRET} jusqu'à ce que lesdits moyens formant transducteurs (92) atteignent ladite température T_{PIC} pendant un autre intervalle de temps t_{MONTEE}, et
répéter ladite étape d'activation séquentielle.

14. Procédé de dégivrage d'une surface de plan de sustentation selon la revendication 12 ou 13, comprenant en outre les étapes consistant à :
déterminer un intervalle de temps t_{BAISSE} entre l'instant où lesdits moyens formant transducteurs (92) atteignent ladite température T_{PIC} et l'instant où ils atteignent une température prédéterminée T_{BAISSE}, et
régler ledit temps d'arrêt t_{ARRET} en fonction de ladite durée t_{BAISSE}.

15. Procédé de dégivrage d'une surface de plan de sustentation selon l'une quelconque des revendications 12 à 14, comprenant en outre les étapes consistant à :
déterminer le moment où lesdits moyens formant transducteurs (92) atteignent une température prédéterminée T_{BAISSE} après ladite étape d'activation,
déterminer un intervalle de temps t_{BAISSE} entre T_{PIC} et T_{BAISSE}, et
régler ledit temps d'arrêt t_{ARRET} en fonction du temps T_{BAISSE}.

16. Procédé de dégivrage d'une surface de plan de sustentation selon l'une quelconque des revendications 12 à 15, selon lequel lesdits moyens formant transducteurs (92) sont disposés en un emplacement où le plan de sustentation (94) est susceptible d'être le siège d'un givrage.

17. Procédé de dégivrage d'une surface de plan de sustentation selon l'une quelconque des revendications 12 à 16, selon lequel lesdits moyens formant transducteurs (92) sont un détecteur résistif de température.

18. Procédé de dégivrage d'une surface de plan de sustentation selon l'une quelconque des revendications 12 à 17, comprenant en outre l'étape consistant à fixer lesdits moyens formant transducteurs (92) au plan de sustentation (94).

19. Procédé de dégivrage d'une surface de plan de sustentation selon la revendication 18, comprenant en outre l'étape de liaison desdits moyens formant transducteurs (92) au plan de sustentation (94).

20. Procédé de dégivrage d'une surface de plan de sustentation selon l'une quelconque des revendications 12 à 19, comprenant en outre les étapes consistant à :
déterminer une pluralité d'intervalles de temps t_{BAISSE} entre l'instant où lesdits moyens formant transducteurs (92) atteignent ladite température T_{PIC} et les instants où ils atteignent une pluralité de températures prédéterminées T_{BAISSE}, et
régler ledit temps d'arrêt t_{ARRET} en fonction desdits intervalles t_{ARRET}.

21. Procédé de dégivrage d'une surface de plan de sustentation selon l'une quelconque des revendications 12 à 20, comprenant en outre les étapes consistant à :
déterminer l'instant où lesdits moyens formant transducteurs (92) atteignent une pluralité de températures t_{baisse} prédéterminées après ladite étape d'activation,
déterminer une pluralité d'intervalles de temps t_{BAISSE} entre les températures T_{PIC} et T_{BAISSE}, et
régler ledit temps d'arrêt t_{ARRET} en fonction desdites températures t_{BAISSE}.
